# EUROPEAN PATENT SPECIFICATION

(11) **EP 0 392 727 B1**
(45) Date of publication and mention of the grant of the patent: **20.08.1997**
(21) Application number: 90303577.2
(22) Date of filing: 03.04.1990
(51) Int. Cl.: A62D 3/00, B01D 53/34, C02F 11/10

(54) **Process for the destruction of organic waste material**
Verfahren zur Vernichtung von organischem Abfallstoff
Procédé de destruction de matériaux organiques de rebut

(30) Priority: 10.04.1989 US 335481; 20.02.1990 US 481197
(43) Date of publication of application: 17.10.1990
(73) Proprietor: 655901 ONTARIO INC., Acton Ontario L7J 2L8 (CA)
(72) Inventor: Hallett, Douglas J., Acton, Ontario, L7J 2L8 (CA); Campbell, Kelvin R., Guelph, Ontario, N1E 4H1 (CA)
(74) Representative: Perry, Robert Edward

(56) References cited:
- EP-A- 0 175 406
- EP-A- 0 257 893
- US-A- 4 301 137
- RGE - REVUE GENERALE DE L'ELECTRICITE, no. 8, September 1987, pages 156-162, Paris, FR; J.-P. GROO: "Destruction des PCB: Procédés en cours de développement"

## Description

### TECHNICAL FIELD

This invention relates to a system for the destruction of organic waste material and more particularly it relates to a process for the destruction of organic waste material which may or may not contain polyhalogenated waste material, and to apparatus for carrying out the process.

### BACKGROUND ART

It is known to destroy halogenated organic waste material by reduction procedures using, for example, sodium metal or sodium napthalide. It is also known to destroy halogenated organic waste material by oxidation, using, for example, high temperature incineration. These known processes have certain limitations or disadvantages in that they can only be used for particular kinds of waste material. Moreover, the chemical reagents used for the destruction are sometimes hazardous to handle and the destruction may lead to the formation of highly toxic by-products.

The dimensions of the problem relating to the disposal of polyhalogenated liquids, particularly polychlorinated biphenyls (known generally, and to the public as PCBs) and associated wastes have been reviewed in the Environment Canada Economic and Technical Review Report EPS 3-EC-83-1. Bearing in mind the suspected carcinogenic nature of PCBs and the apparent absence of degradation in nature, over extremely long time periods, the identified quantities of PCBs presently in use in electrical transformers and capacitors (Table 7 of the Report), comprising a mass value of 14.8 million kilograms, conveys some idea of the scale of the problem.

Furthermore, the accumulation of these materials in numerous localities, mostly remote from the existing large-scale incinerators available in the United States and Canada for disposal purposes further emphasizes the extreme nature of the problem. Public awareness to the potential danger of PCBs to public health also further complicates the situation in precluding transportation thereof to existing combustion facilities. The occurrence of certain, well-publicized, PCB spills has further exacerbated this aspect of the problem.

The existing method of disposing of these types of substance has been by incineration, in large installations. While claims have been made to the achievement of very high percentile effectiveness of disposal by this method, there is concern that the reports may prove less than valid, on a long-term, continuing basis. In addition incineration or oxidation will form highly toxic by-products such as chlorinated dioxins if operated outside of exact optimal temperatures and residence time requirements.

One identified problem, referred to at Page 28 of the above-noted Report, which contributed to the demise of the related PCB incinerator, was the formation of a ring of "agglomerated material" during incineration. This type of "glop" formation may well be a characteristic by-product of incineration systems, and possibly is indicative of partial recombinations of molecules into ring compounds of a suspect type. This constitutes a further reason for providing a changed process.

Pyrolysis or starved air thermal destruction or degradation of solid and liquid organic waste products of hydrocarbons has previously been hampered by the formation of tars and polynuclear aromatic hydrocarbons containing from one to five aromatic rings. This invention includes the addition of gaseous reducing agents, particularly hydrogen, in concentrations sufficient to saturate or reduce the molecules produced such that polyaromatic structures are eliminated as by-products of the intended reaction.

### DISCLOSURE OF THE INVENTION

According to a first aspect of the present invention, a process for the treatment of organic waste material comprises the steps of subjecting the waste material to direct chemical reduction by reaction with a reducing agent at 600°C to 1000°C within a substantially oxygen-free isolated first zone at a pressure above atmospheric up to 1 atmosphere above ambient pressure, by adding sufficient reducing agent to saturate or reduce the molecules produced such that polyaromatic structures are eliminated as by-products; transferring reduced gaseous components to a cooling zone within the first zone; introducing an aqueous component into the cooling zone, cooling and condensing a portion of the gaseous components therein, and collecting the resultant aqueous liquid phase in a collection zone; recycling a portion of the aqueous liquid phase, by introducing the portion into the cooling zone as the aqueous component; and transferring the reduced gaseous components from the cooling zone to a second zone, and subjecting the gaseous components to oxidation with a gaseous oxidising agent at at least 1000°C.

According to a second aspect of the present invention, apparatus suitable for use in the destruction of organic waste material comprises a reducing vessel having a purge gas inlet, heating means, a waste material feed, and a reducing gas admission nozzle; a cooling vessel having cooling means and in connection with the reducing vessel, wherein the cooling vessel has liquid injection means, liquid collection means located below the liquid injection means, and means for transferring liquid from the collection means to the injection means; and a combustor vessel connected to the reducing vessel, and flow-control means adapted to transfer reduced gaseous material unidirectionally from the reducing vessel to the combustor vessel.

Further features of the present invention are apparent from the claims.

It is advantageous to pre-heat waste material to be reduced before its introduction into an isolated reduction zone.

It is possible to capture, through the use of a heat exchanger, energy released during recovery steps and to use the energy to pre-heat unrecovered materials to be oxidized in a later step.

In an alternative embodiment, pre-heating means is provided within an isolated pre-heating zone by an O₂/fuel burner prior to entry of waste materials to the reduction zone.

It is possible to capture, through the use of a heat exchanger, energy released during the oxidation step and to transfer the energy to the waste material for pre-heating prior to subjecting it to the reduction process.

One embodiment incorporates the use of a reduction vessel of generally circular horizontal cross-section and having a centrally located ceramic tube with an outlet of the vessel located above the aperture of the tube. Waste and a gaseous reducing agent are introduced with intimate mixing at the upper perimeter of the vessel. This arrangement provides a baffling effect. Once introduced into the upper region Of the vessel, gaseous wastes must travel to the lower region, through the holes of the tube and upwardly through the tube and aperture in order to reach the next zone provided by the apparatus. A reduction vessel having a tube as a part thereof and an upper inlet thus provides a greater necessary travel distance for gaseous waste and a greater vessel surface area with which such waste may come into contact. Organic material contained in solid waste may be volatized when it strikes a hot vessel surface. In such an embodiment, a flow of water may be provided through the bottom of the vessel to trap particulate matter and carry it to a collection tank. A steady flow of gaseous reducing agent may also be provided in the lower region of the vessel above the flow of water to hinder gaseous waste from contact with water stream.

Waste may be co-injected with a gaseous reducing agent such as hydrogen, gaseous ammonia, natural gas, methane, propane or water vapor, or a mixture of such reducing agents. The reduction may be carried out with or without the addition of a metal catalyst such as iron, zinc, tin or nickel in the form of iron filings or powdered zinc, tin or nickel which may be co-injected into the vessel to promote the reduction reaction.

In one aspect, the invention comprises the steps of co-injecting (on a continuous basis) the waste, with hydrogen, into a pre-heated reduction vessel, maintaining the vessel at an internal pressure above atmospheric, up to one atmosphere above ambient, without the addition of catalyst materials.

It is also preferable to pre-heat waste material to be injected into the reduction vessel.

The reaction vessel can be arranged and the rate of injection may be adjusted, such that the residence time of gaseous material in the reduction vessel is at least 0.1 seconds and preferably from about 5 seconds to about 10 seconds. A particularly effective residence time in which to effectively complete the reduction is about 5 seconds.

The reduction is carried out at a temperature of from 600°C to 1000°C, preferably within the range of from 700°C to 900°C and particularly at a temperature of from 800°C to 900°C.

The reduction may also be carried out in the presence of a metal, such as an iron, nickel, zinc or tin catalyst. The catalyst may be in the form of iron filings, powdered nickel, powdered zinc or powdered tin.

The organic waste material may or may not contain organic compounds such as halogenated biphenyls, halogenated benzenes, halogenated phenols, halogenated cycloalkanes, halogenated alkanes, halogenated alkenes, halogenated dioxins and halogenated dibenzofurans. For example, the organic waste material may contain commonly used chlorinated organic compounds such as chlorinated biphenyls, also known as polychlorinated biphenyls (PCBs), chlorinated benzenes, chlorinated phenols, chlorinated cycloalkanes, chlorinated alkanes, chlorinated alkenes, chlorinated dioxins and chlorinated dibenzofurans.

The organic waste material may be in the form of a liquid, a pumpable sludge, a fine particulate slurry such as contaminated sediment/water mixtures, or a pulverized or shredded solid such as contaminated wood waste or soils. Such waste material may include, for example, oils containing polychlorinated biphenyls (PCBs) as waste products from capacitor and transformer manufacturing processes, or from obsolete electrical or non-electrical equipment, and products used in various industries as plasticizers, hydraulics fluids and lubricants.

The organic waste material may also be such that it contains non-halogenated organic compounds. It may, for example, be in the form of shredded or particulate organic solid material, such as shredded pathogenic waste material.

The reaction vessel for the reduction stage of the process is lined with suitable chemical and thermal resistant materials to withstand gaseous by-products generated, such as hydrogen halides, for example, hydrogen chloride. It may also be fitted with a clean-out auger to remove solid debris or by-products, such as metals, metal salts, silicates or other solid matter, which accumulates in the vessel.

While gaseous reducing agents such as gaseous ammonia are less costly and also potentially less explosive than hydrogen, methane or propane, certain advantages are obtained with these latter reducing agents. However, while the use of gaseous hydrogen is preferred for a number of reasons, it is contemplated that propane may be used if the BTU content of the waste is potentially too low for proper oxidation to take place. More preferably, hydrogen is used for the reduction and propane is added during oxidation.

The use of a reducing vessel and selection of gaseous hydrogen as the reducing agent has many beneficial and optimizing effects. Thus, in the case of one embodiment, a road-mobile system for the on-site destruction of accumulated PCBs and other halogenated wastes, the utilization of hydrogen minimizes the necessary size of the reducing vessel for carrying out a continuous process and the potential for production of carbon. Reduction of PCBs or hazardous waste to gaseous fuel further reduces the necessity of additional fuel and the additional required combustion air for the fuel, therefore greatly reducing the size of the secondary incinerator and overall destruction apparatus.

The safety requirements for the reduction vessel involve the use of a multiple purge by inert gas, such as nitrogen, to ensure the absence of oxygen (by way of air) within the vessel, so as to preclude the likelihood of explosion. As the process is generally proposed to be a continuous process, the purging requirement becomes proportionately less onerous.

A further advantage of utilizing hydrogen, generally in gaseous form, is the capability of utilizing a jet or jets of hydrogen in impacting relation with the substances being reduced, so as to achieve a highly active mixing zone wherein the as-supplied state of the hydrogen is utilized in order to optimize the mixing efficiency, and the reduction process.

In the case of fluid waste, a jet of the waste can be impacted by a transversely directed jet of hydrogen, to effect atomization with intimate mixing, to promote the chemical effectiveness of the reduction process.

One embodiment incorporates the use of a radially inward gas cross-flow nozzle of the CALDYN (TM) type. The subject system is capable of handling fluid waste incorporating particles up to 0.6 cm (one-quarter inch) mesh size therein, and droplets sized down to as small as forty µm (40) can be economically obtained.

It is to be understood that the reduction may also be carried out in the presence of water vapor which does not inhibit the reduction reaction. Thus, it is possible to destroy organic waste material, sludges or sediments, such as contaminated harbour sludges or sediments, containing substantial quantities of water.

The hot reaction mixture from this reduction procedure will generally be dehalogenated, hydrogenated or reduced hydrocarbons or substantially dehalogenated hydrocarbons together with hydrogen halide, such as hydrogen chloride, water and excess hydrogen.

It may be depending upon the waste material, that it is preferable to recover a substantial portion of the initially reduced products.

In one embodiment of the invention, products of the reduction step are cooled in the presence of aqueous mist injected into the flow path of the gaseous reduction products. In a subsequent step, gaseous remains may be further cooled, condensed to a second liquid and collected before the oxidation step of any material which still remains in gaseous form.

One initial reduction product, if the starting waste material contains halogenated organic material, is a hydrogen halide gas, which will largely dissociate when dissolved in the initially collected aqueous liquid, making it acidic. Such initially collected acidic liquid may thus be neutralized in the presence of a base such as sodium bicarbonate, calcium carbonate, sodium hydroxide or other suitable basic material.

Depending upon the starting material, and conditions under which the process is carried out, a second liquid portion having a generally lower liquification temperature than the first may be subsequently collected. If, for example, the starting waste material contained substantial amounts of chlorobenzene, a second liquid containing substantial amounts of organic material including the reduced product benzene may be collected. In such an instance, a substantial amount of the second liquid may also contain water which was not collected as part of the first liquid. The water, or a large part thereof, if it forms a separate layer or phase from the organic material may be separated removed and recycled for use as aqueous mist in the initial cooling of products of the reduction step.

The gaseous material remaining after the second cooling may then be transferred to an oxidation zone. Material for oxidation is preferably pre-heated before introduction to oxidation conditions. In certain embodiments, a heat exchange process is used to capture and transfer energy released or removed during the second cooling step to aid in the pre-heating of material to be oxidized. Such a heat exchange process may be sufficient on its own for the heating step prior to oxidation.

A demisting step may be used prior to the pre-heating process in order to ensure that all condensed materials are removed from the remaining gaseous material.

In certain embodiments, a heat exchange process is used to transfer energy liberated during the oxidation process to the waste pre-heating step prior to reduction. This transfer is preferably achieved by heating water, which may form into steam, in a closed zone. The heated water or steam may be circulated within its closed zone from the oxidation zone to the waste pre-heating zone and back again to effect pre-heating of waste material.

As described previously, it is usually preferable to introduce the reducing agent and waste through a nozzle such that they are intimately mixed. Where it arises that it is inconvenient to introduce the waste through a nozzle the waste material may be, as an alternative, initially introduced to a bath of molten vitrification material which provides a pre-heating of the waste before entry into the reduction chamber. An example of material used in the vitrification of incinerator ash is molten silica. In such an aspect of the invention, the waste material to be reduced vaporizes from the molten material and is subsequently reduced by a gaseous reducing agent which is introduced separately and above the vitrification material.

The invention is illustrated in principle by, but not limited to, the following examples:

### Example 1

1 Molar equivalent of polychlorinated biphenyl (Arochlor*1248) was reacted with 22 molar equivalents of hydrogen in a first reaction chamber at a temperature of 875°C and 1 atmosphere gauge during a reaction period of about 30 seconds. This reaction produced 99.9% destruction and the gaseous reaction mixture thus obtained contained hydrogen chloride, benzene, biphenyl and chlorobenzenes. This gaseous reaction mixture was then passed through an interfacing tube at 875°C into a second reaction chamber where oxidation could take place. A 5% excess of pre-heated air was then mixed with the gaseous reaction mixture in the second reaction chamber and oxidation was completed at a temperature of 1000 to 1200°C during a residence time of 2 seconds. This oxidation of the gaseous reaction mixture was effective in completing oxidation of the remaining reactants in the mixture.
* TM

### Example 2

9 Molar equivalents of monochlorobenzene and 2 molar equivalents of 1,2,4-trichlorobenzene were reacted with 21 molar equivalents of hydrogen in a first reaction chamber at a temperature of 925°C and 1 atmosphere pressure during a reaction time of 30 seconds. The reaction produced 99.95% dehalogenation of the chlorobenzenes. This gaseous reaction mixture was then passed through an interfacing tube at 875°C into a second reaction chamber where oxidation could take place.

A 5% excess of pre-heated air was then mixed with the gaseous reaction mixture in the second reaction chamber and oxidation was completed at a temperature of 1000°C to 1200°C during a residence time of 2 seconds. This oxidation of the gaseous reaction mixture was effective in completing oxidation of the remaining reactants in the mixture.

### Example 3

1 Molar equivalent of chloroform was reacted with 10 moles of water vapor at 950°C at 1 atmosphere of pressure in a first reaction chamber during a reaction time of 30 seconds. This reaction caused 99.9% dehalogenation of chloroform. This gaseous reaction mixture was then passed through an interfacing tube at 875°C into a second reaction chamber where oxidation could take place. A 5% excess of pre-heated air was then mixed with the gaseous reaction mixture in the second reaction chamber and oxidation was completed at a temperature of 1000°C to 1200°C during a residence time of 2 seconds. This oxidation of the gaseous reaction mixture was effective in completing oxidation of the remaining reactants in the mixture.

### Example 4

A 0.44% solution of hexachlorobenzene in hexane was passed through a tubular reaction chamber at a rate of 1.8 millimoles per minute of hexane together with hydrogen at a rate of 17 millimoles per minute and water at a rate of 28 millimoles per minute for a 60 minute period. The reactor temperature was maintained at 1000°C at the injection end, 950°C in the middle, and 900°C at the exit end, and the average residence time was 3.3 seconds. The reaction products were captured in a condensing flask at the reaction tube exit followed by an XAD7 resin cartridge. The flask and tube contents were analyzed for hexachlorobenzene and chlorobenzenes, and the destruction removal efficiency for both hexachlorobenzene and total chorobenzenes was found to be 99.999%. The products of the reaction were methane, hydrogen chloride, benzene, and chlorobenzenes. The specific chlorobenzenes detected included 1,2,3,4-tetrachlorobenzene, pentachlorobenzene and hexachlorobenzene. In other tests, chlorobenzenes found also included monochlorobenzene, 1,2-dichlorobenzene, 1,3-dichlorobenzene, 1,4-dichlorobenzene, 1,2,3-trichlorobenzene 1,2,4-trichlorobenzene, 1,3,5-trichlorobenzene, 1,2,3,5-tetrachlorobenzene, and 1,2,4,5-tetrachlorbenzene. Water was recovered from the products of each reaction in a quantity similar to that introduced.

The foregoing examples constituted laboratory feasibility tests, to establish effectiveness and residence times.

In carrying out the present invention at an effective production level, it is necessary to provide a reduction chamber suitably pre-heated to a reaction sustaining temperature.

In view of the advantages that obtain by use of hydrogen, as previously set forth, and the imperative need to provide an effective gaseous purge, the pre-heating of the subject vessel is preferred by way of passive heating means, such as electrical heating elements, as opposed to active heating methods, such as gas combustion. Owing to the highly active chemicals generally evolved from the subject process, the use of protective, chemically resistant vessel linings is important. This requirement and the use of radiant heat are not incompatible.

The use of steam or superheated steam as both a purge gas and as the pre-heating agent, is contemplated.

The present invention thus provides a system for the reduction and subsequent oxidation of organic waste materials, the system having a reducing vessel for the chemical reduction of the waste materials therein, first gas entry means for admitting a purge gas within the vessel in air purging relation thereto, to provide an oxygen-free environment within the vessel; pre-heating means for raising the temperature within the vessel above a predetermined minimum reduction temperature for a predetermined group of the organic waste material; feed means for feeding the organic waste material in a feedable form into the vessel within a localized mixing zone therein; fluid admission nozzle means for admitting a reducing fluid in directed intimate mixing relation with the waste material in the mixing zone, whereby the waste material is effectively reduced to a form including combustible gaseous components therewith.

The system further provides a combustion chamber to receive the combustible gaseous products for combustion therein.

The system further provides flue gas treatment means to handle the highly acidic flue gas by way of an alkaline scrub down, prior to release to the atmosphere.

A control system, not forming a part of the present invention, provides an automated control, in order to monitor and maintain appropriate feed rates of the process constituents, and safe and suitable environmental conditions for the respective stages of the process.

### BRIEF DESCRIPTION OF THE DRAWINGS

Certain embodiments of the invention are described, reference being made to the accompanying drawings, wherein:
Figure 1 is a schematic diagram of a process embodiment according to the invention;
Figure 2 is a schematic elevation, in diametrical section, of a reduction chamber having upper waste inlets and an inner tube;

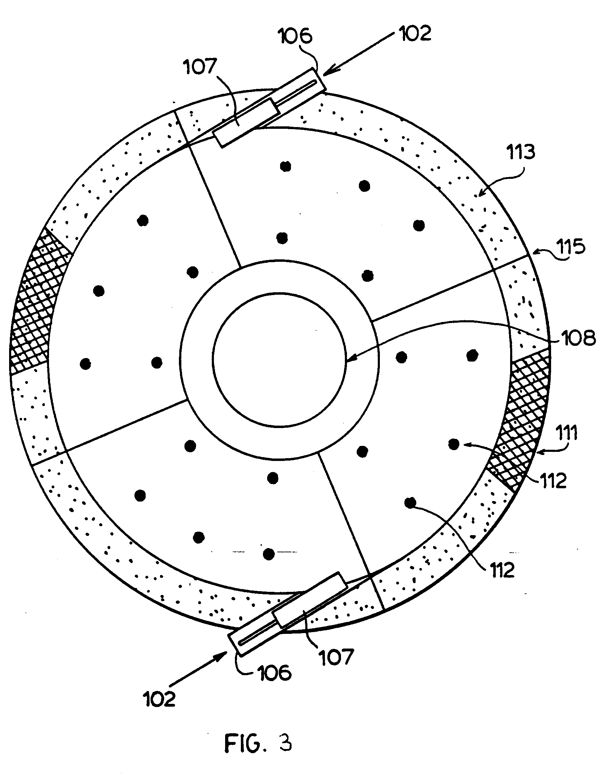

Figure 3 is a horizontal cross-section take along 7-7 of Figure 2;
Figure 4 is a schematic of a grit collection system for use with a reduction chamber;
Figure 5 is a schematic of an embodiment process employing a vitrification process in conjunction with a reduction process; and
Figure 6 is a schematic of a waste pre-heater system employing an 0₂/fuel burner prior to waste reduction.

### DETAILED DESCRIPTION OF THE PREFERRED EMBODIMENTS

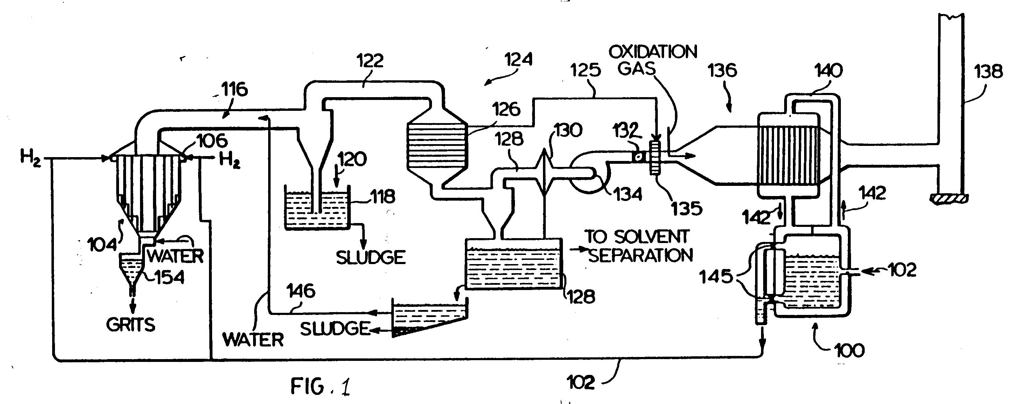

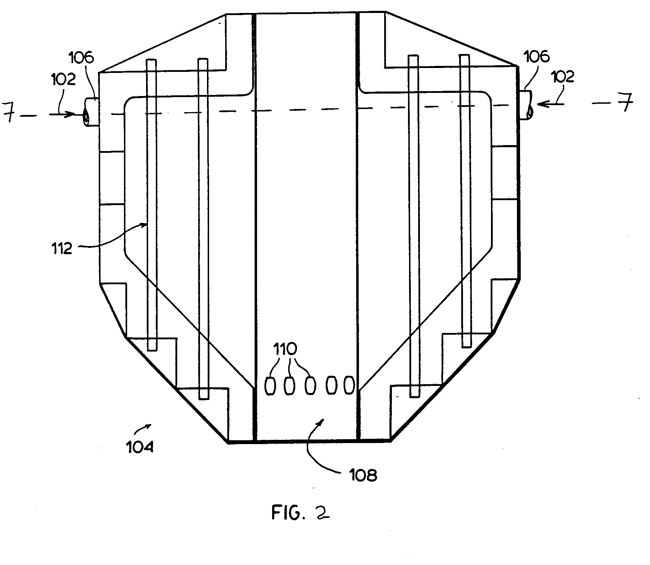

Turning to Figure 1, a process incorporating both reduced product recovery and water coolant recycling is illustrated schematically. Waste passes through pre-heater 100 as indicated by arrows 102 to be introduced into reduction vessel 104 through a nozzle 107 in which the waste is intimately mixed with a gaseous reducing agent, preferably hydrogen (H₂), through waste/reducing agent inlet ports 106 in the upper region of the reduction vessel. As shown in Figure 2, vessel 104 comprises ceramic tube 108 with ports 110 located in its lower region. Glow bars 112 heat the vessel. A steady but low flow of gaseous reducing agent is introduced in the lower region of the vessel also, at inlet ports 114 to create a barrier which hinders entry of gaseous waste into water stream 152 which is further described below. Gaseous waste materials must travel into the lower region of the vessel to pass through ports 110 and up through the interior of tube 108 to proceed to a next step of the process.

As illustrated in Figure 1, reduced gaseous waste materials next pass through retention zone 116 with subsequent introduction of water. The process illustrated in Figure 1 is for the treatment of halogenated organic waste products, a reduction product of which is hydrogen halide gas. Water is injected as a mist and hydrogen halide gases dissolve and dissociate in the water droplets which condense and collect in tank 118. The dissolved gases make the water, that is aqueous liquid, acidic. Tank 118 is provided with entry means 120 for controlled introduction thereinto of an acid neutralization agent such as a bicarbonate salt, sodium hydroxide, calcium carbonate, etc. The acid in the aqueous liquid collected in tank 118 may thus be neutralized. Uncondensed gases, including both reduction products and water vapor next pass through zone 122 into cooling zone 124. The gases are cooled to a lower temperature and more gases condense. The cooling temperature of this zone is maintained within a few degrees, and usually above the freezing temperature of the condensed liquids which collect in vessel 128. Gases which remain uncondensed flow through zone 128, through demister 130 which is a baffle to catch any remaining small droplets or particles. Demister 130 is located so as to permit any matter caught thereby to flow into vessel 128.

According to this embodiment, the remaining gases next pass through flame arrest 132 to be oxidized in the final stages of the process. Propulsion of gases through the above process steps is aided by fan located in vicinity 134.

An oxidizing agent, such as air or oxygen is introduced to mix with the gases after passage through the flame arrest 132. Gases passing through the oxidation pre-heating zone located immediately after the flame arrest 132 are pre-heated prior to oxidation in oxidation zone 136. Oxidation zone 136 is heated, as may be required, with an oxidation gas such as natural gas or propane to promote oxidation of the remaining gases by the oxygen and the final products are released through stack 138.

In the Figure 1 embodiment, a heat exchanger 126 is used in the cooling zone 124, the energy released being used in conjunction with heat exchanger 135 to provide heat for pre-heating of the gases in the oxidation pre-heating zone as indicated by arrow 125. Further, a closed zone 140 containing water is located to capture energy released during the oxidation step, the water being heated, so as to vaporize to steam, which is used to aid the pre-heating of waste in pre-heater 100. Movement of water and steam within zone 140 is indicated by arrows 142.

The process is operated with controlled throughput, as by control valves 145, and temperatures such that a major portion of the acidic gases produced by the reduction step are collected and neutralized in tank 118. This may be achieved by maintaining the temperature in the retention zone 116 in the neighborhood below the boiling point of water, that is, between about 70°C and about 100°C and preferably about 85°C. Some organic reduction products may or may not also be collected as liquid in tank 118 and this liquid thus may or may not require further treatment.

Cooling zone 124 is maintained at a significantly lower temperature than retention zone 116, in the neighborhood of and usually above the freezing temperature of the liquid being collected in vessel 128, that is up to about 20°C and preferably about 5°C. As is known to those skilled in the art organic reduction products such as those which condense and collect in vessel 128 are readily separable, in large part, from the aqueous liquid which also condenses. That is, the liquid collected in vessel 128 will generally form two layers, a first aqueous layer comprising mainly water, and a second organic layer comprising mainly organic reduction products. The aqueous layer is separated and recycled as indicated by arrow 146 into retention zone 116. The remaining organic layer collected in vessel 128 may then be purified by distillation and/or other techniques to remove undesired impurities. The product of the purification may then be used or sold, etc.

It will be appreciated that the step of trapping acidic gases in the aqueous liquid collected in tank 118 is necessary to the extent that such gases are produced by reduction of the particular organic waste being used as feedstock for the process, and such a step may not be required in which case components of the gaseous stream from the reducing vessel would be directly condensed and cooled to a low temperature below about 20°C.

Waste material often comprises non-volatile particulate material which upon entry into vessel 104 at 106 will travel to the bottom of the vessel. Such material is here referred to as "grits" and the preferred embodiment provides a grits collection step.

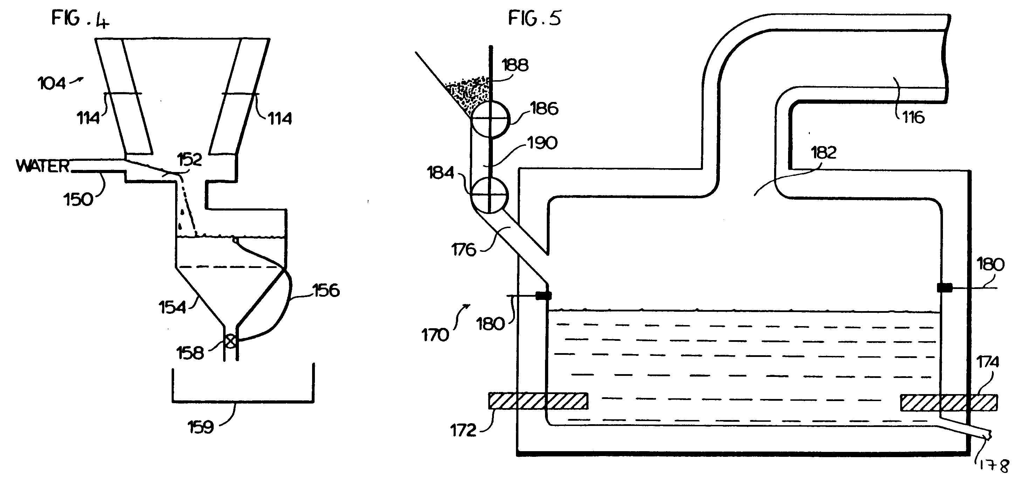

As best seen in Figure 4, hydrogen inlet ports, 114 are located in the lower region of vessel 104. A water (H₂O) inlet port 150 is located below the hydrogen inlet ports. Grits fall into the water stream 152 and are carried into grit collection tank 154. The level of water in tank 154 is monitored, for example, with the use of a mercury level switch 156 which automatically activates valve 158 to empty tank 154 when the water level has reached a particular height. Appropriate safeguards are employed to ensure that grits clogging the bottom of vessel 104, malfunction of switch 156, valve 158, etc., may be detected. The effluent emptied from tank 154 is appropriately treated and disposed of.

An alternative waste introduction system, particularly useful for ash or solid waste utilizes a vitrification process. With reference to Figure 5, vitrification vessel 170 is provided with electrodes 172, 174, waste inlet port 176, slag outlet port 178, gaseous reducing agent inlets 180, and the interior of the vessel communicates with retention zone 116 through upper outlet 182. The waste inlet 176 is provided with rotating valves 184, 186. In use valve 186 is opened to permit waste material 188 to fall into passage 190 while valve 184 is closed. Valve 186 is then closed, valve 184 is opened and waste material contained in the passage falls through inlet 176 into vessel 170. Thus, an "air-lock" system is provided to preclude large amounts of oxygen from entering the vessel 170. It will be appreciated that the object of this valve arrangement is to preclude large explosive amounts of oxygen from contacting hydrogen within the vessel and other suitable "air-lock" systems may be employed.

In use, vitrification material is added to vessel 170 and may or may not be part of the waste being treated.

An electric current is passed from one electrode to the other via the material which is heated and vitrifies. Volatile organic material in the vitrification material is released into the overlying gaseous reducing atmosphere, usually hydrogen. The vitrification process itself may be controlled to provide sufficient heat for the reduction process.

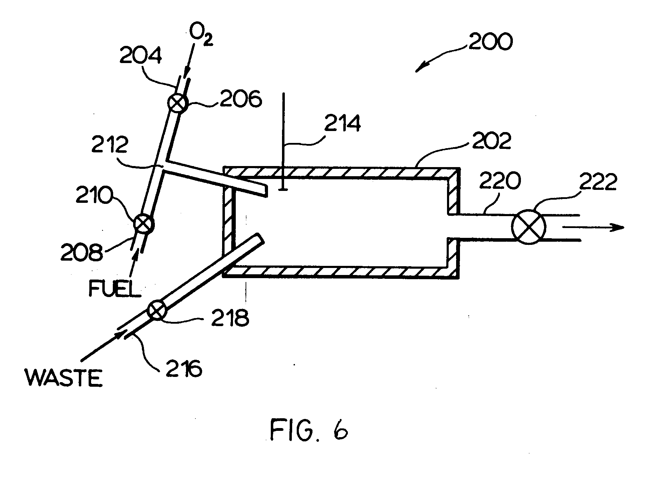

Under certain circumstances, it may be desirable to pre-heat the waste material in a waste pre-heating zone by means of an oxygen/fuel burner. Usually, the fuel would be a hydrocarbon fuel such as methane or natural gas. If, for instance, electricity is in short supply at the site where the waste is being destroyed it may therefore be desirable to pre-heat the waste to higher temperature than would be achievable through heat exchange as explained above. In such case, a pre-heater system such as that shown schematically in Figure 6 may be used. The pre-heater system 200 comprises preheating chamber 202, oxygen entry means 204 with valve controller 206, fuel entry means 208 with valve controller 210, 0₂/fuel mixing area 212, 0₂/fuel ignition means 214 to provide a spark to initiate burning of the 0₂/fuel mixture. There is waste entry means 216 with valve controller 218 and exit means 220 with exit control valve 222 to permit unidirectional entry of waste material to reduction vessel 104 via nozzle 107. In practice, fuel would be provided in slight stoichiometric excess to the oxygen so as not to promote oxidation of the waste and the waste would be pre-heated to a temperature below about 800°C. It would be possible, of course, for waste to be directed through pre-heater 100 (Figure 5) prior to entry into pre-heater system 200.

## Claims

1. A process for the treatment of organic waste material, comprising the steps of:
subjecting the waste material to direct chemical reduction by reaction with a reducing agent at 600°C to 1000°C within a substantially oxygen-free isolated first zone at a pressure up to 1 atmosphere above ambient pressure, by adding sufficient reducing agent to saturate or reduce the molecules produced such that polyaromatic structures are eliminated as by-products;
transferring reduced gaseous components to a cooling zone within the first zone;
introducing an aqueous component into the cooling zone, cooling and condensing a portion of the gaseous components therein, and collecting the resultant aqueous liquid phase in a collection zone;
recycling a portion of the aqueous liquid phase, by introducing the portion into the cooling zone as the aqueous component, and transferring the reduced gaseous components from the cooling zone to a second zone, and subjecting the gaseous components to oxidation with a gaseous oxidising agent at at least 1000°C.

2. A process according to claim 1, comprising the further step of pre-heating the reduced gaseous components in an oxidation pre-heating zone within the second zone, before subjecting the gaseous components to oxidation.

3. A process according to claim 2 comprising the further step of exchanging energy between the cooling zone and the oxidation pre-heating zone.

4. A process according to any preceding claim, comprising the further step of washing water through a lower region of the first zone and capturing grit material in the water.

5. A process according to any preceding claim, comprising the further step of pre-heating the organic waste material in a waste pre-heating zone to below 200°C, e.g. about 150°C, and subsequently unidirectionally transferring the organic waste material to the first zone.

6. A process according to any preceding claim, comprising the further step of vitrifying the waste material within the first zone.

7. A process according to any preceding claim, wherein the cooling zone is maintained at 0 to 20°C, e.g. about 5°C.

8. A process according to claim 7, comprising the further step of introducing the aqueous component into a retention zone within the first zone, condensing a second portion of the gaseous components therein such that from one-third to two-thirds, e.g. about one-half, of the aqueous component is condensed, collecting condensed components in a neutralising zone within the first zone, and subsequently cooling and condensing the first aqueous portion.

9. A process according to claim 7 or claim 8, comprising the further step of introducing the aqueous component into a retention zone within the first zone, condensing a second portion of the gaseous components therein at 70 to 100°C, e.g. about 85°C, collecting condensed components in a neutralising zone within the first zone, and subsequently cooling and condensing the first aqueous portion.

10. A process according to any preceding claim, wherein the reducing agent is a gas selected from hydrogen, ammonia, natural gas, methane, propane and water vapour, preferably hydrogen.

11. A process according to any preceding claim, wherein the reduction is carried out at 700 to 900°C, preferably 800 to 900°C.

12. A process according to any preceding claim, wherein the waste material is subjected to reduction within the first zone over a residence time of at least 0.1 seconds, preferably 0.1 to 45 seconds, e.g. about 5 seconds.

13. A process according to any preceding claim, wherein the reduction is carried out using a gaseous reducing agent, and in the presence of a metal catalyst, preferably selected from iron, nickel, zinc or tin, e.g. iron filings, powdered zinc, powdered nickel or powdered tin.

14. A process according to any preceding claim, wherein the reaction mixture obtained by reduction is at 600 to 1000°C, e.g. 800 to 900°C, prior to introducing the aqueous component.

15. A process according to any preceding claim, wherein the waste material is in the form of a liquid, pumpable sludge, fine particulate slurry, pulverised solid, aqueous sediment or shredded or particulate solid, or is inorganic and contaminated with organic material.

16. A process according to any preceding claim, wherein the waste material contains organic compounds selected from halogenated biphenyls, halogenated cycloalkanes, halogenated alkanes, halogenated dioxins, halogenated dibenzofurans, halogenated alkenes, halogenated terphenyls, halogenated polyaromatic hydrocarbons, gaseous mixtures thereof, aerosol mists, and mixtures thereof.

17. A process according to any preceding claim, comprising the prior step of pre-heating the waste material to no more than 800°C by ignition of fuel and oxygen in the presence of the waste material in a waste pre-heating zone, wherein the fuel is in stoichiometric excess of the oxygen, and subsequently unidirectionally transferring the waste material to the first zone.

18. A process according to claim 17, wherein the fuel is methane or natural gas.

19. Apparatus suitable for use in the destruction of organic waste material, which comprises a reducing vessel (104) having a purge gas inlet, heating means (112), a waste material feed (106), and a reducing gas admission nozzle (107); a cooling vessel (124) having cooling means and in connection with the reducing vessel, wherein the cooling vessel has liquid injection means, liquid collection means (128) located below the liquid injection means, and means (146) for transferring liquid from the collection means to the injection means; and a combustor vessel (136) connected to the reducing vessel, and flow-control means (145) adapted to transfer reduced gaseous material unidirectionally from the reducing vessel to the combustor vessel.

20. Apparatus according to claim 19, wherein the reducing vessel further includes a gas outlet, at an elevated location therein.

21. Apparatus according to claim 19 or claim 20, wherein the feed is for organic waste material in liquid and particulate form and the gas admission nozzle has a body portion, an inlet connected to the feed and adapted to receive the waste material, having an axially-directed nozzle adapted to discharge the waste material as a jet within the body portion, the gas admission nozzle being inwardly directed to discharge the reducing gas in impacting relation with the jet.

22. Apparatus according to any of claims 19 to 21, additionally comprising a scrubber adapted to scrub fluid combustion products from the combustor vessel, with an alkaline solution of predetermined pH value.

23. Apparatus according to any of claims 19 to 22, additionally comprising an electrical energy generator adapted to receive hot combustion gases.

24. Apparatus according to claim 23, wherein the energy generator includes a boiler adapted to receive the hot gases, and is connected in driving relation with an alternating current generator.

25. Apparatus according to any of claims 19 to 24, wherein the feed and the gas admission nozzle are located in an upper region of the reducing vessel, and the reducing vessel has a baffle adapted to provide an extended passage between the feed and the flow control means.

26. Apparatus according to claim 25, additionally comprising a grits collector (159) located below the feed and the baffle.

27. Apparatus according to claim 26, wherein the grits collector comprises a liquid inlet port (152) and a collection tank (154).

28. Apparatus according to claim 27, wherein the collection tank has a lower valve (158) adapted to transfer liquid and grits from the tank.

29. Apparatus according to any of claims 19 to 28, additionally comprising an oxidation pre-heater vessel located between the flow-control means (145) and the combustor vessel (136).

30. Apparatus according to claim 29, additionally comprising heat-transfer means (126, 135) adapted to transfer energy released during cooling to the oxidation pre-heater vessel.

31. Apparatus according to any of claims 19 to 30, additionally comprising a waste pre-heater vessel (100) connected to the waste material feed.

32. Apparatus according to any of claims 19 to 31, additionally comprising second heat-transfer means, e.g. water and steam circulation means (142), connected to the combustor vessel and the waste pre-heater vessel.

33. Apparatus according to claim 31 or 32 comprising an O₂/hydrocarbon fuel burner (200) adapted to heat the pre-heater vessel.

34. Apparatus according to any of claims 19 to 33, additionally comprising a neutralising tank in the connection between the reducing vessel and the cooling vessel, the neutralising tank comprising liquid injection means, liquid collection means (118) and neutralising agent feed means (120).

## Patentansprüche

1. Ein Verfahren zur Behandlung von organischem Abfallmaterial, umfassend die Schritte:
Unterwerfen des Abfallmaterials einer unmittelbaren chemischen Reduktion durch Umsetzung mit einem Reduktionsmittel bei 600 bis 1000°C innerhalb einer im wesentlichen sauerstofffreien isolierten ersten Zone bei einem Druck, der bis zu einer Atmosphäre über dem Umgebungsdruck liegt, durch ausreichende Zugabe eines Reduktionsmittels, um die erzeugten Moleküle abzusättigen oder zu reduzieren, so daß polyaromatische Strukturen als Nebenprodukte eliminiert werden;
Überführen der reduzierten gasförmigen Komponenten in eine Kühlzone innerhalb der ersten Zone;
Einbringen einer wäßrigen Komponente in die Kühlzone, Abkühlen und Kondensieren eines Teils der gasförmigen Komponenten darin, und Sammeln der sich ergebenden wäßrigen Flüssigphase in einer Sammelzone;
Zurückführen eines Teils der wäßrigen Flüssigphase durch Einbringen des Teils in die Kühlzone als wäßrige Komponente, und
Überführen der reduzierten gasförmigen Komponenten aus der Kühlzone in eine zweite Zone, und Unterwerfen der gasförmigen Komponenten einer Oxidation mit einem gasförmigen Oxidationsmittel bei wenigstens 1000°C.

2. Ein verfahren gemaß Anspruch 1, das den weiteren Schritt umfaßt, die reduzierten gasförmigen Komponenten in einer Oxidations-Vorheizzone innerhalb der zweiten Zone vorzuheizen, bevor man die gasförmigen Komponenten der Oxidation unterwirft.

3. Ein Verfahren gemäß Anspruch 2, das den weiteren Schritt umfaßt, Energie zwischen der Kühlzone und der Oxidations-Vorheizzone auszutauschen.

4. Ein Verfahren gemäß einem vorgehenden Anspruch, das den weiteren Schritt umfaßt, Wasser durch den unteren Bereich der ersten Zone durchzuleiten und Teilchenmaterial in Wasser aufzunehmen.

5. Ein Verfahren gemäß einem vorhergehenden Anspruch, das den weiteren Schritt umfaßt, das organische Abfallmaterial in einer Vorheizzone für Abfall auf unter 200°C, z.B. auf ungefähr 150°C, zu erhitzen und anschließend das organische Abfallmaterial in einer Richtung in die erste Zone zu überführen.

6. Ein Verfahren gemäß einem vorhergehenden Anspruch, das den weiteren Schritt umfaßt, das Abfallmaterial innerhalb der ersten Zone zu verglasen.

7. Ein Verfahren gemäß einem vorhergehenden Anspruch, wobei die Kühlzone bei 0 bis 20°C, z.B. bei ungefähr 5°C gehalten wird.

8. Ein Verfahren gemäß Anspruch 7, das den weiteren Schritt umfaßt, die wäßrige Komponente in eine Rückhaltezone innerhalb der ersten Zone einzubringen, einen zweiten Teil der gasförmigen Komponenten darin zu kondensieren, so daß ein Drittel bis zwei Drittel, z.B. ungefähr die Hälfte der wäßrigen Komponente kondensiert wird, die kondensierten Komponenten in einer Neutralisierungszone innerhalb der ersten Zone zu sammeln, und nachfolgend zu kühlen und den ersten wäßrigen Teil zu kondensieren.

9. Ein verfahren gemäß Anspruch 7 oder Anspruch 8, das den weiteren Schritt umfaßt, die wäßrige Komponente in eine Rückhaltezone innerhalb der ersten Zone einzubringen, einen zweiten Teil der gasförmigen Komponenten darin bei 70 bis 100°C, z.B. bei ungefähr 85°C zu kondensieren, die kondensierten Komponenten in einer Neutralisierungszone innerhalb der ersten Zone zu sammeln, und nachfolgend zu kühlen und den ersten wäßrigen Teil zu kondensieren.

10. Ein Verfahren gemäß einem vorhergehenden Anspruch, wobei das Reduktionsmittel ein Gas ist, das aus Wasserstoff, Ammoniak, Erdgas, Methan, Propan und Wasserdampf, bevorzugt Wasserstoff ausgewählt wird.

11. Ein Verfahren gemäß einem vorhergehenden Anspruch, wobei die Reduktion bei 700 bis 900°C, bevorzugt bei 800 bis 900°C, durchgeführt wird.

12. Ein Verfahren gemäß einem vorhergehenden Anspruch, wobei das Abfallmaterial einer Reduktion innerhalb der ersten Zone für eine Verweilzeit von wenigstens 0,1 Sekunden, bevorzugt von 0,1 bis 45 Sekunden, z.B. von ungefähr 5 Sekunden, unterworfen wird.

13. Ein Verfahren gemäß einem vorhergehenden Anspruch, wobei die Reduktion unter Verwendung eines gasförmigen Reduktionsmittels und in der Gegenwart eines Metallkatalysators, der bevorzugt aus Eisen, Nickel, Zink oder Zinn, z.B. Eisenspänen, gepulvertem Zink, gepulvertem Nickel oder gepulvertem Zinn ausgewählt wird, durchgeführt wird.

14. Ein Verfahren gemäß einem vorhergehenden Anspruch, wobei die Reaktionsmischung, die über die Reduktion erhalten wird, vor dem Einbringen der wäßrigen Komponente bei 600 bis 1000°C, z.B. bei 800 bis 900°C, vorliegt.

15. Ein Verfahren gemäß einem vorhergehenden Anspruch, wobei das Abfallmaterial in der Form einer Flüssigkeit, eines pumpbaren Schlammes, einer feinverteilten Aufschlämmung, eines pulverisierten Festkörpers, eines wäßrigen Sedimentes oder eines zerkleinerten oder aus einzelnen Teilchen bestehenden Festkörpers vorliegt, oder anorganisch und mit organischem Material kontaminiert ist.

16. Ein Verfahren gemäß einem vorhergehenden Anspruch, wobei das Abfallmaterial organische Verbindungen, die aus halogenierten Biphenylen, halogenierten Cycloalkanen, halogenierten Alkanen, halogenierten Dioxinen, halogenierten Dibenzofuranen, halogenierten Alkenen, halogenierten Terphenylen, halogenierten polyaromatischen Kohlenwasserstoffen, gasförmigen Mischungen davon, Aerosolnebeln, und Mischungen davon ausgewählt werden, enthält.

17. Ein Verfahren gemäß einem vorhergehenden Anspruch, das die Vorstufe umfaßt, das Abfallmateriales durch die Verbrennung von Brennstoff und Sauerstoff in Gegenwart des Abfallmateriales in einer Vorheizzone für Abfall auf nicht mehr als 800°C vorzuheizen, wobei der Brennstoff in einem stöchiometrischen Überschuß zum Sauerstoff vorliegt, und anschließend das organische Abfallmaterial in einer Richtung in die erste Zone zu überführen.

18. Ein Verfahren gemäß Anspruch 17, wobei der Brennstoff Methan oder Erdgas ist.

19. Eine Vorrichtung, die für die Verwendung beim Abbau von organischem Abfallmaterial geeignet ist, die umfaßt eigen Reduktionskessel (104), der einen Einlaß für Spülgas, Heizmittel (112), eine Zuführung (106) für Abfallmaterial, und eine Einlaßdüse (107) für Reduktionsgas aufweist; einen Abkühlkessel (124) mit Abkühlmitteln und in Verbindung mit dem Reduktionskessel, wobei der Abkühlkessel Mittel zum Einbringen von Flüssigkeit, Mittel (128) zum Sammeln von Flüssigkeit, die unter den Mitteln zum Einbringen von Flüssigkeit angeordnet sind, und Mittel (146) zum Überführen von Flüssigkeit von den Mitteln zum Sammeln zu den Mitteln zum Einbringen aufweist; und einen Brennkessel (136), der mit dem Reduktionskessel verbunden ist, und Mittel (145) zur Steuerung des Durchsatzes, die ausgelegt sind, um das reduzierte gasförmige Material in einer Richtung aus dem Reduktionskessel zum Brennkessel zu überführen.

20. Eine Vorrichtung gemäß Anspruch 19, wobei der Reduktionskessel im oberen Bereich einen Gasauslaß einschließt.

21. Eine Vorrichtung gemäß Anspruch 19 oder Anspruch 20, wobei die Zuführung für organisches Abfallmaterial in flüssiger und feinverteilter Form ausgelegt ist und die Gaseinlaßdüse einen Gehäuseteil, einen Einlaß, verbunden mit der Zuführung und so ausgelegt, das Abfallmaterial aufzunehmen, mit einer axial ausgerichteten Düse, die so ausgelegt ist, das Abfallmaterial als Strahl im Gehäuseteil abzugeben, aufweist, wobei die Gaseinlaßdüse nach innen gerichtet ist, um das Reduktionsgas in einer auf den Strahl auftreffenden Richtung abzugeben.

22. Eine Vorrichtung gemäß einem der vorhergehenden Ansprüche 19 bis 21, die zusätzlich eine Waschvorrichtung, die so ausgelegt ist, um flüssige Verbrennungsprodukte aus dem Brennkessel mit einer alkalischen Lösung mit zuvor eingestelltem pH-Wert zu waschen, umfaßt.

23. Eine Vorrichtung gemäß einem der vorhergehenden Ansprüche 19 bis 22, die zusätzlich einen Erzeuger für elektrische Energie, der ausgelegt ist, um heiße Verbrennungsgase aufzunehmen, umfaßt.

24. Eine Vorrichtung gemäß Anspruch 23, wobei der Energieerzeuger einen Boiler, der ausgelegt ist, um die heißen Gase aufzunehmen, umfaßt und der in Antriebsverbindung mit einem Wechselstromgenerator verbunden ist.

25. Eine Vorrichtung gemäß einem der Ansprüche 19 bis 24, wobei die Zuführung und die Einlaßdüse für Gas im oberen Bereich des Reduktionskessels angeordnet sind und der Reduktionskessel ein Prallblech, das so ausgelegt ist, einen vergrößerten Durchlaß zwischen der Zuführung und den Mitteln zur Steuerung des Durchsatzes zu ergeben, aufweist.

26. Eine Vorrichtung gemäß Anspruch 25, die zusätzlich einen Partikelsammler (159), der unter der Zuführung und dem Prallblech angeordnet ist, umfaßt.

27. Eine Vorrichtung gemäß Anspruch 26, wobei der Partikelsammler eine Einlaßöffnung (152) für Flüssigkeit und einen Sammeltank (154) umfaßt.

28. Eine Vorrichtung gemäß Anspruch 27, wobei der Sammelbehälter ein unteres Ventil (158), das so ausgelegt ist, Flüssigkeit und Partikel aus dem Tank zu überführen, aufweist.

29. Eine Vorrichtung gemäß einem der Ansprüche 19 bis 28, die zusätzlich einen Oxidations-Vorheizkessel, der zwischen den Mitteln (145) zur Steuerung des Durchsatzes und dem Brennkessel (136) angeordnet ist, umfaßt.

30. Eine Vorrichtung gemäß Anspruch 29, das zusätzlich Mittel (126, 135) zur Wärmeübertragung, die so ausgelegt sind, um Energie, die während des Abkühlens freigesetzt wird, auf den Oxidations-Vorheizkessel zu übertragen, aufweist.

31. Eine Vorrichtung gemäß einem der Ansprüche 19 bis 30, die zusätzlich einen Abfallvorheizkessel (100), der mit der Zuführung für Abfallmaterial verbunden ist, umfaßt.

32. Eine Vorrichtung gemäß einem der Ansprüche 19 bis 31, die zusätzlich zweite Mittel zur Wärmeübertragung, z.B. Wasser- und Dampfzirkulationsmittel (142), die mit dem Brennkessel und dem Vorheizkessel für Abfall verbunden sind, umfaßt.

33. Eine Vorrichtung gemäß Anspruch 31 oder 32, die einen O₂/Kohlenwasserstoff-Brennstoff-Brenner (200), der ausgelegt ist, um den Vorheizkessel aufzuheizen, umfaßt.

34. Eine Vorrichtung gemäß einem der Ansprüche 19 bis 33, die zusätzlich einen Neutralisierungstank in der Verbindung zwischen dem Reduktionskessel und dem Abkühlkessel umfaßt, wobei der Neutralisierungstank Mittel zum Einbringen von Flüssigkeit, Mittel (118) zum Sammeln von Flüssigkeit und Mittel (120) für die Zugabe von Neutralisierungsmittel umfaßt.

## Revendications

1. Procédé de traitement de matières organiques de rebut comprenant les étapes consistant à:
soumettre les matières de rebut à une réduction chimique directe par réaction avec un agent réducteur à une température comprise entre 600°C et 1000°C dans une première zone isolée substantiellement dépourvue d'oxygène sous une pression allant jusqu'à 1 atmosphère au-dessus de la pression ambiante, en ajoutant une quantité suffisante d'agent réducteur pour saturer les molécules produites afin d'éliminer les structures polyaromatiques en tant que sous-produits;
transférer les constituants gazeux réduits dans une zone de refroidissement à l'intérieur de la première zone;
introduire un constituant gazeux dans la zone de refroidissement, y refroidir et condenser une partie des constituants gazeux, et recueillir la phase liquide aqueuse résultante dans une zone de récupération;
recycler une partie de la phase liquide aqueuse en introduisant la partie dans la zone de refroidissement sous la forme du constituant aqueux; et
transférer les constituants gazeux réduits provenant de la zone de refroidissement dans une seconde zone, et soumettre les constituants gazeux à une oxydation avec un agent oxydant gazeux à au moins 1000°C.

2. Procédé selon la revendication 1, comprenant l'étape supplémentaire de préchauffage des constituants gazeux réduits dans une zone de préchauffage d'oxydation à l'intérieur de la seconde zone, avant de soumettre les constituants gazeux à une oxydation.

3. Procédé selon la revendication 2, comprenant l'étape supplémentaire d'échange d'énergie entre la zone de refroidissement et la zone de préchauffage d'oxydation.

4. Procédé selon l'une quelconque des revendications précédentes, comprenant l'étape supplémentaire de lavage avec de l'eau dans une région inférieure de la première zone et de capture des impuretés dans l'eau.

5. Procédé selon l'une quelconque des revendications précédentes, comprenant l'étape supplémentaire de préchauffage des matières organiques de rebut dans une zone de préchauffage des déchets à une température inférieure à 200°C, par exemple environ 150°C, puis de transfert de façon unidirectionnelle des matières organiques de rebut dans la première zone.

6. Procédé selon l'une quelconque des revendications précédentes, comprenant l'étape supplémentaire de vitrification des matières de rebut dans la première zone.

7. Procédé selon l'une quelconque des revendications précédentes, dans lequel la zone de refroidissement est maintenue à une température de 0 à 20°C, par exemple environ 5°C.

8. Procédé selon la revendication 7, comprenant l'étape supplémentaire d'introduction du constituant gazeux dans une zone de rétention à l'intérieur de la première zone, de condensation d'une seconde partie des constituants gazeux dans celle-ci afin qu'un tiers à deux tiers, par exemple environ la moitié, du constituant aqueux soit condensé, de récupération des constituants condensés dans une zone de neutralisation à l'intérieur de la première zone, et ensuite de refroidissement et de condensation de la première partie aqueuse.

9. Procédé selon la revendication 7 ou la revendication 8, comprenant l'étape supplémentaire d'introduction du constituant aqueux dans une zone de rétention à l'intérieur de la première zone, de condensation d'une seconde partie des constituants gazeux dans celle-ci à une température de 70°C à 100°C, par exemple environ 85°C, de récupération des constituants condensés dans une zone de neutralisation à l'intérieur de la première zone, puis de refroidissement et de condensation de la première partie aqueuse.

10. Procédé selon l'une quelconque des revendications précédentes, dans lequel l'agent réducteur est un gaz choisi parmi l'hydrogène, l'ammoniac, le gaz naturel, le méthane, le propane et la vapeur d'eau, de préférence l'hydrogène.

11. Procédé selon l'une quelconque des revendications précédentes, dans lequel la réduction est réalisée à une température de 700°C à 900°C, de préférence de 800 à 900°C.

12. Procédé selon l'une quelconque des revendications précédentes, dans lequel les matières de rebut sont soumises à une réduction à l'intérieur de la première zone pendant un temps de séjour d'au moins 0,1 seconde, de préférence de 0,1 à 45 secondes, par exemple environ 5 secondes.

13. Procédé selon l'une quelconque des revendications précédentes, dans lequel la réduction est réalisée à l'aide d'un agent réducteur gazeux et en présence d'un catalyseur métallique, de préférence choisi parmi le fer, le nickel, le zinc ou l'étain, par exemple des charges de fer, du zinc pulvérulent, du nickel pulvérulent ou de l'étain pulvérulent.

14. Procédé selon l'une quelconque des revendications précédentes, dans lequel le mélange réactionnel obtenu par réduction est à une température de 600°C à 1000°C, par exemple de 800°C à 900°C, avant l'introduction du constituant gazeux.

15. Procédé selon l'une quelconque des revendications précédentes, dans lequel les matières de rebut sont sous forme d'un liquide, d'une boue pompable d'une suspension de fines particules, d'un solide pulvérisé, d'un sédiment aqueux ou d'un solide effiloché ou particulaire, ou sont des matières minérales contaminées par une matière organique.

16. Procédé selon l'une quelconque des revendications précédentes, dans lequel les matières de rebut contiennent des composés organiques choisis parmi les biphényles halogénés, les cycloalcanes halogénés, les alcanes halogénés, les dioxines halogénées, les dibenzofurannes halogénés, les alcènes halogénés, les terphényles halogénés, les hydrocarbures polyaromatiques halogénés, leurs mélanges gazeux, les brumes d' aérosol et leurs mélanges.

17. Procédé selon l'une quelconque des revendications précédentes, comprenant l'étape antérieure de préchauffage des matières de rebut à une température d'au plus 800°C par combustion de combustible et d'oxygène en présence des matières de rebut dans une zone de préchauffage du déchet, dans lequel le combustible est en excès stoechiométrique par rapport à l'oxygène, puis de transfert unidirectionnel des matières de rebut dans la première zone.

18. Procédé selon la revendication 17, dans lequel le combustible est le méthane ou le gaz naturel.

19. Appareil convenant à une utilisation pour la destruction de matières organiques de rebut, qui comprend un récipient de réduction (104) équipé d'une entrée de gaz de purge, un dispositif de chauffage (112), une alimentation de matières de rebut (106), et une buse d'admission de gaz réducteur (107); un récipient de refroidissement (124) équipé d'un dispositif de refroidissement et en relation avec le récipient de réduction, dans lequel le récipient de refroidissement possède un dispositif d'injection d'un liquide, un dispositif de récupération d'un liquide (128) situé en dessous du dispositif d' injection d'un liquide, et un dispositif (146) de transfert d'un liquide depuis le dispositif de récupération vers le dispositif d'injection; et un récipient de combustion (136) relié au récipient de réduction, et un dispositif de contrôle de l'écoulement (145) adapté au transfert d'une matière gazeuse réduite de façon unidirectionnelle depuis le réacteur de réduction vers le récipient de combustion.

20. Appareil selon la revendication 19, dans lequel le récipient de réduction comprend en outre une sortie de gaz placée en une position élevée dans celui-ci.

21. Appareil selon la revendication 19 ou la revendication 20, dans lequel l'alimentation est conçue pour des matières organiques de rebut sous forme liquide et particulaire, et la buse d'admission d'un gaz possède une portion de corps, une entrée reliée à l'admission et adaptée à la réception des matières de rebut, équipée d'une buse dirigée axialement adaptée à la décharge des matières de rebut sous forme d'un jet à l'intérieur de la portion de corps, la buse d'admission d'un gaz étant dirigée vers l'intérieur pour décharger le gaz réducteur de façon à entrer en contact avec le jet.

22. Appareil selon l'une quelconque des revendications 19 à 21, comprenant en plus un dispositif de lavage adapté au lavage des produits de combustion fluides provenant du récipient de combustion, avec une solution alcaline ayant une valeur de pH prédéterminée.

23. Appareil selon l'une quelconque des revendications 19 à 22, comprenant en plus un générateur d'énergie électrique adapté à la réception de gaz de combustion chauds.

24. Appareil selon la revendication 23, dans lequel le générateur d'énergie comprend un bouilleur adapté à la réception de gaz chauds, et est relié par entraînement avec un générateur de courant alternatif.

25. Appareil selon l'une quelconque des revendications 19 à 24, dans lequel l'alimentation et la buse d'admission d'un gaz sont placées dans une région supérieure du récipient de réduction, et le récipient de réduction est équipé d'une chicane adaptée à la création d'un passage prolongé entre l'alimentation et le dispositif de contrôle de l'écoulement.

26. Appareil selon la revendication 25, comprenant en plus un récupérateur d'impuretés (159) placé en dessous de l'alimentation et de la chicane.

27. Appareil selon la revendication 26, dans lequel le récupérateur d'impuretés comprend une ouverture d'entrée d'un liquide (152) et une cuve de récupération (154).

28. Appareil selon la revendication 27, dans lequel la cuve de récupération possède une vanne inférieure (158) adaptée au transfert d'un liquide et d'impuretés provenant de la cuve.

29. Appareil selon l'une quelconque des revendications 19 à 28, comprenant en plus un récipient de préchauffage d'oxydation placé entre le dispositif de contrôle de l'écoulement (145) et le récipient de combustion (136).

30. Appareil selon la revendication 29, comprenant en plus un dispositif de transfert de chaleur (126, 135) adapté au transfert d'énergie libérée pendant le refroidissement au récipient de préchauffage d'oxydation.

31. Appareil selon l'une quelconque des revendications 19 à 30, comprenant en plus un récipient de préchauffage des déchets (100) relié à l'alimentation des matières de rebut.

32. Appareil selon l'une quelconque des revendications 19 à 31, comprenant en plus un second dispositif de transfert de chaleur, par exemple un dispositif de circulation d'eau ou de vapeur d'eau (142), relié au récipient de combustion et au récipient de préchauffage des déchets.

33. Appareil selon la revendication 31 ou 32, comprenant un brûleur de O₂/combustible hydrocarboné (200) adapté au chauffage du récipient de préchauffage.

34. Appareil selon l'une quelconque des revendications 19 à 33, comprenant en plus une cuve de neutralisation en relation entre le récipient de réduction et le récipient de refroidissement, la cuve de neutralisation comprenant des moyens d'injection d'un liquide, des moyens de récupération d'un liquide (118) et des moyens d'alimentation d'un agent de neutralisation (120).
